# EUROPÄISCHE PATENTSCHRIFT

(11) **EP 3 130 926 B1**
(45) Veröffentlichungstag und Bekanntmachung des Hinweises auf die Patenterteilung: **20.05.2020**
(21) Anmeldenummer: 15180477.0
(22) Anmeldetag: 11.08.2015
(51) Int. Cl.: G01N 35/10, B01L 3/02, G01N 35/00

(54) **VERFAHREN ZUR BEREITSTELLUNG EINES REAKTIONSANSATZES UND AUTOMATISCHES ANALYSEGERÄT**
METHOD FOR PROVIDING A REACTION MIXTURE AND AN AUTOMATIC ANALYSIS DEVICE
PROCÉDÉ DE FOURNITURE D'UN MÉLANGE REACTIONNEL ET UN APPAREIL D'ANALYSE AUTOMATIQUE

(43) Veröffentlichungstag der Anmeldung: 15.02.2017
(73) Patentinhaber: Siemens Healthcare Diagnostics Products GmbH, 35041 Marburg (DE)
(72) Erfinder: Verhalen, Christian, 65201 Wiesbaden (DE)

(56) Entgegenhaltungen:
- EP-A1- 2 623 202
- EP-A2- 0 496 962
- WO-A1-97/02893

## Beschreibung

Die Erfindung liegt auf dem Gebiet der automatischen Analysegeräte und betrifft ein automatisches Analysegerät sowie ein Verfahren zur Bereitstellung eines Reaktionsansatzes bestehend aus einem Gemisch einer zu analysierenden Flüssigkeit und mindestens einer Reagenzflüssigkeit mit Hilfe einer Pipettiervorrichtung.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen, in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß zu einem Reaktionsansatz vermischt wird, wodurch eine biochemische Reaktion in Gang gesetzt wird, die eine messbare Veränderung einer optischen Eigenschaft des Reaktionsansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Zahlreiche biochemische Reaktionen für den Nachweis von Analyten haben ihr Optimum in einem Temperaturbereich von etwa 25 bis 37 °C, also oberhalb einer typischen Raumtemperatur. Daher ist es erforderlich, die Temperatur der Reaktionsansätze entsprechend einzustellen und aufrecht zu erhalten. Dies erfolgt bekanntermaßen mit Hilfe von beheizbaren Pipettiernadeln, in denen ein angesaugtes Flüssigkeitsvolumen erwärmt wird, so dass bei Abgabe des Flüssigkeitsvolumens in ein Reaktionsgefäß die gewünschte Temperatur in dem bereit zu stellenden Reaktionsansatz erzielt wird. Der Einsatz beheizbarer Pipettiernadeln ist insbesondere auch deshalb notwendig, weil die Reagenzflüssigkeiten und teilweise auch die Probenflüssigkeiten in den meisten Analysegeräten auf Temperaturen von etwa 4 bis 10 °C gekühlt werden, um die Lagerstabilität zu erhöhen.

Beheizbare Pipettiernadeln und deren Verwendung zur Bereitstellung von temperierten Reaktionsansätzen sind im Stand der Technik hinlänglich bekannt.

Herkömmliche Pipettiernadeln sind üblicherweise mit einer Heizvorrichtung, einem Temperatursensor und einer Steuerung für die Heizvorrichtung ausgestattet. Der Temperatursensor misst die aktuelle Temperatur der Pipettiernadel und vergleicht diese mit einer vorgegebenen Solltemperatur, z.B. 38 °C, oder einem vorgegebenen Solltemperaturbereich. Wird beispielsweise festgestellt, dass die aktuelle Temperatur unterhalb der vorgegebenen Solltemperatur liegt, wird über die Steuerung die Heizvorrichtung aktiviert, solange bis die Solltemperatur erreicht ist. Derartige Pipettiervorrichtungen sind beispielsweise in EP-A2-1134024 und EP-A1-2623202 beschrieben.

In der WO 97/02893 ist eine Pipettiervorrichtung beschrieben, die zwei Temperatursensoren aufweist, um etwaige Auswirkungen einer Temperaturdifferenz auf das pipettierte Volumen korrigieren zu können.

Nichtsdestotrotz gibt es hinsichtlich der Erwärmung von Flüssigkeiten in einer Pipettiernadel zahlreiche technische Herausforderungen, die besonderer Anpassungen bedürfen. Beispielsweise ist es problematisch sicher zu stellen, dass auch unterschiedliche Volumina zuverlässig auf die gewünschte Abgabetemperatur gebracht werden. In der EP-A2-0496962 ist zur Lösung dieses Problems eine Pipettiernadel vorgeschlagen, die zwei unabhängig arbeitende Heizvorrichtungen aufweist, die jeweils mit einem Temperatursensor und mit einer Steuerung ausgestattet sind.

Bei den derzeitigen Verfahren zur Bereitstellung eines Reaktionsansatzes, bei denen eine beheizbare Pipettiernadel verwendet wird, ist jedoch problematisch, dass trotz Überwachung und Regelung der Pipettiernadeltemperatur immer wieder Flüssigkeitsvolumina pipettiert werden, die nicht die gewünschte Abgabetemperatur haben, weil üblicherweise nur dann, wenn festgestellt wird, dass die Pipettiernadeltemperatur über einen längeren Zeitraum bzw. über eine Mehrzahl von Pipettiervorgängen nicht die vorgegebene Solltemperatur aufweist, eine Fehlermeldung an die Steuereinheit des Analysegeräts weiter gegeben wird und erst dann ein Abbruch aller laufenden Analysen vorgenommen wird. Im Grunde wird dadurch nur ein totaler Ausfall der

Temperierfunktion erkannt; einzelne von der Solltemperatur abweichende Pipettiervorgänge werden überhaupt nicht erkannt. Dies hat den Nachteil, dass in Einzelfällen Reaktionsansätze bereit gestellt werden, die nicht die erforderliche Reaktionstemperatur aufweisen, was zu einem fehlerhaften Messergebnis führen kann. Weiterhin nachteilig ist, dass bei einem totalen Ausfall der Temperierfunktion, alle laufenden Analysen abgebrochen und dann von Neuem gestartet werden müssen, so dass wertvolle Proben- und Reagenzflüssigkeiten in großem Umfang verloren gehen.
Der vorliegenden Erfindung lag daher die Aufgabe zugrunde, Mittel und Verfahren für ein automatisches Analysegerät bereit zu stellen, die eine Verringerung des Risikos von fehlerhaften Messergebnissen aufgrund von Temperaturabweichungen in den Reaktionsansätzen bewirken und die einen Ressourcen-schonenden Abbruch weiterer Analysen ermöglichen, wenn ein totaler Ausfall der Temperierfunktion einer Pipettiernadel auftritt.

Diese Aufgabe wird gemäß den Ansprüchen 1 bis 5 gelöst. Unter anderem wird eine Pipettiervorrichtung und deren Verwendung beschrieben. Eine geeignete Pipettiervorrichtung zeichnet sich dadurch aus, dass die Pipettiernadel mit einem ersten Temperatursensor in geringer Entfernung zur Spitze der Pipettiernadel und einem zweiten Temperatursensor in größerer Entfernung zur Spitze der Pipettiernadel ausgestattet ist, wobei der zweite, weiter von der Nadelspitze entfernte Temperatursensor als solcher keine Verbindung zu einer Steuerung für eine Heizvorrichtung aufweist und lediglich der Messung eines Referenztemperaturwertes dient.
Beschrieben ist eine Pipettiervorrichtung umfassend
- eine Pipettiernadel mit einer Spitze und mit einem ersten Temperatursensor in geringer Entfernung zur
- Spitze der Pipettiernadel und einem zweiten Temperatursensor in größerer Entfernung zur Spitze der Pipettiernadel,
- eine Heizvorrichtung für die Pipettiernadel, und
- eine Steuerung für die Heizvorrichtung,
wobei der erste Temperatursensor mit der Steuerung für die Heizvorrichtung verbunden ist und der zweite Temperatursensor keine Verbindung zu einer Steuerung für eine Heizvorrichtung aufweist.

Bei einer Pipettiernadel handelt es sich um eine Hohlnadel, z.B. aus Edelstahl, mit einer Längsachse, wobei das Ende der Hohlnadel, das für die Aufnahme und Abgabe einer zu transferierenden Flüssigkeit vorgesehen ist, als Spitze bezeichnet wird. Ausgehend von der Spitze sind entlang der Längsachse der Pipettiernadel der Pipettiervorrichtung zunächst ein erster Temperatursensor in geringer Entfernung zur Spitze der Pipettiernadel und dann in größerer Entfernung zur Spitze der Pipettiernadel ein zweiter Temperatursensor angebracht. Nur der erste Temperatursensor ist mit der Steuerung für die Heizvorrichtung verbunden.

Unter dem Begriff "Steuerung für eine Heizvorrichtung" ist eine Steuerung zu verstehen, die von einem Temperatursensor erfasste Temperaturmesswerte empfangen und verarbeiten kann und daraufhin die Aktivität der Heizvorrichtung regelt.

Vorzugsweise ist die Pipettiervorrichtung an einem automatisch verfahrbaren oder schwenkbaren Transferarm befestigt, der Teil eines automatischen Analysegeräts ist. Damit kann die Pipettiervorrichtung zwischen mindestens einer Flüssigkeitsentnahmeposition und mindestens einer Flüssigkeitsabgabeposition horizontal bewegt werden. Ferner ist die Pipettiervorrichtung oder zumindest die Pipettiernadel in vertikaler Richtung bewegbar. An einer Flüssigkeitsentnahmeposition wird die Pipettiernadel möglichst entlang der Mittelachse des Flüssigkeitsgefäßes vertikal nach unten bewegt bis die Nadelspitze in die Flüssigkeit eintaucht. Das Eintauchen wird mit Hilfe eines entsprechenden Sensors registriert. Durch Erzeugen eines Unterdrucks in der Pipettiernadel mittels einer Dosierpumpe wird ein definiertes Volumen der Flüssigkeit angesaugt, die Pipettiernadel wird vertikal nach oben und anschließend horizontal zur Flüssigkeitsabgabeposition bewegt. An der Flüssigkeitsabgabeposition wird dann eine definierte Flüssigkeitsmenge in ein Zielgefäß, beispielsweise ein Reaktionsgefäß, abgegeben.

Ein Gegenstand der vorliegenden Erfindung ist die Verwendung einer beschriebenen Pipettiervorrichtung in einem Verfahren zur Bereitstellung eines Reaktionsansatzes bestehend aus einem Gemisch einer zu analysierenden Flüssigkeit und mindestens einer Reagenzflüssigkeit in einem Reaktionsgefäß. Das Verfahren umfasst die folgenden Schritte:
- Aufsaugen eines Volumens einer Reagenzflüssigkeit in die beheizbare Pipettiernadel;
- Verfahren der Pipettiernadel zu dem gewünschten Ort der Abgabe des aufgesaugten Volumens der Reagenzflüssigkeit in ein Reaktionsgefäß; dann
- Messen der Temperatur mit dem ersten und mit dem zweiten Temperatursensor;
- Vergleichen der von dem ersten Temperatursensor gemessenen Temperatur mit einer vorgegebenen Mindesttemperatur und einer vorgegebenen Maximaltemperatur; und
- Feststellen, dass die von dem ersten Temperatursensor gemessene Temperatur entweder
   (i) die vorgegebene Maximaltemperatur überschreitet, oder
   (ii) die vorgegebene Maximaltemperatur nicht überschreitet und die vorgegebene Mindesttemperatur nicht unterschreitet, oder
   (iii) die vorgegebene Mindesttemperatur unterschreitet,
wobei
- wenn festgestellt wird, dass die von dem ersten Temperatursensor gemessene Temperatur (i) die vorgegebene Maximaltemperatur überschreitet oder (iii) die vorgegebene Mindesttemperatur unterschreitet - das aufgesaugte Volumen der Reagenzflüssigkeit von der Pipettiernadel abgegeben und dann entsorgt wird.

Bei dem erfindungsgemäßen Verfahren wird im Gegensatz zu den Verfahren aus dem Stand der Technik gezielt vor jeder Abgabe eines Flüssigkeitsvolumens die Temperatur der Pipettiernadel gemessen und geprüft, ob die gemessene Temperatur innerhalb eines Sollwertbereiches liegt. Ergibt die Prüfung, dass die gemessene Temperatur außerhalb des Sollwertbereiches liegt, wird dafür gesorgt, dass mit dem in der Pipettiernadel enthaltenen und mutmaßlich falsch temperierten Flüssigkeitsvolumen kein Reaktionsansatz bereit gestellt wird, der am Ende für die Ermittlung eines Messergebnisses verwendet wird. Stattdessen wird dafür gesorgt, dass das mutmaßlich falsch temperierte Flüssigkeitsvolumen entsorgt, also verworfen wird. Dies hat den Vorteil, dass das Risiko eines fehlerhaften Messergebnisses aufgrund einer Temperaturabweichung in dem Reaktionsansatz wesentlich verringert wird.

Für die Durchführung des erfindungsgemäßen Verfahrens ist es nicht zwingend notwendig, dass eine Pipettiervorrichtung mit einer Pipettiernadel verwendet wird, die einen ersten und einem zweiten Temperatursensor aufweist, wobei nur der erste, Nadelspitzen-nahe Temperatursensor mit der Steuerung für die Heizvorrichtung verbunden ist. Auch die Verwendung einer Pipettiervorrichtung mit einer Pipettiernadel die einen ersten und einen zweiten Temperatursensor aufweist, wobei der erste, Nadelspitzen-nahe Temperatursensor und auch der zweite Nadelspitzen-ferne Temperatursensor mit einer Steuerung für die Heizvorrichtung(en) verbunden ist, ist, solange eine entsprechende Steuerung der Verfahrensschritte gewährleistet ist, selbstverständlich möglich.

In dem erfindungsgemäßen Verfahren ist ferner vorgesehen, dass - wenn festgestellt wird, dass die von dem ersten Temperatursensor gemessene Temperatur (ii) die vorgegebene Maximaltemperatur nicht überschreitet und die vorgegebene Mindesttemperatur nicht unterschreitet - die folgenden Verfahrensschritte ausgeführt werden:
- Ermitteln der absoluten Temperaturdifferenz zwischen der von dem ersten Temperatursensor gemessenen Temperatur und der von dem zweiten Temperatursensor gemessenen Temperatur;
- Vergleichen der ermittelten Temperaturdifferenz mit einem vorgegebenen Maximaltemperaturdifferenzwert; und
- Feststellen, dass die ermittelte Temperaturdifferenz entweder
   (a) größer ist als der vorgegebene Maximaltemperaturdifferenzwert oder
   (b) kleiner oder gleich dem vorgegebenen Maximaltemperaturdifferenzwert ist,
wobei
- wenn festgestellt wird, dass (a) die ermittelte Temperaturdifferenz größer ist als der vorgegebene Maximaltemperaturdifferenzwert - das aufgesaugte Volumen der Reagenzflüssigkeit von der Pipettiernadel abgegeben und dann entsorgt wird.

Ergibt die Prüfung, dass die von dem ersten Temperatursensor gemessene Temperatur zwar innerhalb des vorgegebenen Toleranzbereiches liegt, aber die ermittelte Temperaturdifferenz größer ist als der vorgegebene Maximaltemperaturdifferenzwert, wird dafür gesorgt, dass mit dem in der Pipettiernadel enthaltenen und mutmaßlich falsch temperierten Flüssigkeitsvolumen kein Reaktionsansatz bereit gestellt wird, der am Ende für die Ermittlung eines Messergebnisses verwendet wird. Stattdessen wird dafür gesorgt, dass das mutmaßlich falsch temperierte Flüssigkeitsvolumen entsorgt, also verworfen wird. Dies hat den Vorteil, dass das Risiko eines fehlerhaften Messergebnisses aufgrund einer Temperaturabweichung in dem Reaktionsansatz noch weiter verringert wird.

Die Entsorgung eines aufgesaugten Volumens von Reagenzflüssigkeit kann auf unterschiedliche Art und Weise erfolgen. Die Entsorgung kann beispielsweise dadurch erfolgen, dass die Pipettiernadel in eine Position verfahren wird, in der die Abgabe des aufgesaugten Volumens der Reagenzflüssigkeit in ein Abfallgefäß erfolgt. In automatischen Analysegeräten, die über Waschstationen für Pipettiernadeln verfügen, kann die Entsorgung auch dadurch erfolgen, dass die Pipettiernadel in eine Position verfahren wird, in der die Abgabe des aufgesaugten Volumens der Reagenzflüssigkeit in eine Waschstation für Pipettiernadeln erfolgt. Dies hat den Vorteil, dass kein gesondertes Abfallgefäß bereit gestellt werden muss und dass die Entsorgung der mutmaßlich falsch temperierten Flüssigkeit und die Reinigung der Pipettiernadel in einem einzigen Arbeitsschritt durchgeführt werden können. Alternativ kann auch vorgesehen werden, dass das aufgesaugte Volumen der Reagenzflüssigkeit trotz seiner mutmaßlich falschen Temperatur von der Pipettiernadel in das vorgesehene Reaktionsgefäß abgegeben wird und dann das Reaktionsgefäß mit dem Reaktionsansatz verworfen wird.

In dem erfindungsgemäßen Verfahren ist ferner vorgesehen, dass - wenn festgestellt wird, dass die von dem ersten Temperatursensor gemessene Temperatur (ii) die vorgegebene Maximaltemperatur nicht überschreitet und die vorgegebene Mindesttemperatur nicht unterschreitet - die folgenden Verfahrensschritte ausgeführt werden:
- Ermitteln der absoluten Temperaturdifferenz zwischen der von dem ersten Temperatursensor gemessenen Temperatur und der von dem zweiten Temperatursensor gemessenen Temperatur;
- Vergleichen der ermittelten Temperaturdifferenz mit einem vorgegebenen Maximaltemperaturdifferenzwert; und
- Feststellen, dass die ermittelte Temperaturdifferenz entweder
   (a) größer ist als der vorgegebene Maximaltemperaturdifferenzwert oder
   (b) kleiner oder gleich dem vorgegebenen Maximaltemperaturdifferenzwert ist,
wobei
- wenn festgestellt wird, dass (b) die ermittelte Temperaturdifferenz kleiner oder gleich dem vorgegebenen Maximaltemperaturdifferenzwert ist - das aufgesaugte Volumen der Reagenzflüssigkeit von der Pipettiernadel in das Reaktionsgefäß abgegeben wird und das Reaktionsgefäß mit dem Reaktionsansatz einer Messeinheit zugeführt wird, in der eine physikalische Eigenschaft des Reaktionsansatzes gemessen wird.

Die Maximaltemperatur und die Mindesttemperatur, die im Grunde den Temperaturtoleranzbereich definieren, sowie der Maximaltemperaturdifferenzwert sind systemabhängige Größen, die empirisch in Testreihen ermittelt werden müssen. Systemabhängige Einflussfaktoren sind beispielsweise Länge, Durchmesser und Materialbeschaffenheit der Pipettiernadel, die Größe der zu pipettierenden Reagenzflüssigkeitsvolumina, die ursprüngliche absolute Temperatur der Reagenzflüssigkeit, die ursprüngliche absolute Temperatur der Probenflüssigkeit, die absolute Temperatur, die im Reaktionsansatz erzielt werden soll, etc. Für ein gegebenes Analysesystem ist daher zur Festlegung von Maximaltemperatur, Mindesttemperatur Maximaltemperaturdifferenzwert eine Testreihe durchzuführen, mit der ein geeigneter Wert für die jeweilige Größe ermittelt wird.

Ein weiterer Gegenstand der vorliegenden Erfindung ist ein automatisches Analysegerät mit mindestens einer an einem automatisch verfahrbaren oder schwenkbaren Transferarm befestigten Pipettiervorrichtung, wie sie weiter oben beschrieben ist.

Das erfindungsgemäße automatische Analysegerät umfasst ferner mehrere Aufnahmepositionen für die Aufnahme von Reagenzgefäßen, mehrere Aufnahmepositionen für die Aufnahme von Reaktionsgefäßen, mindestens eine Messeinheit zur Messung einer physikalischen Eigenschaft eines Reaktionsansatzes, sowie eine Steuerung, die so konfiguriert ist, dass sie ein erfindungsgemäßes Verfahren zur Bereitstellung eines Reaktionsansatzes steuert.

Insbesondere ist die Steuerung so konfiguriert, dass sie ein Verfahren zur Bereitstellung eines Reaktionsansatzes bestehend aus einem Gemisch einer zu analysierenden Flüssigkeit und mindestens einer Reagenzflüssigkeit in einem Reaktionsgefäß mit den folgenden Schritten steuert:
- Beheizen der Pipettiernadel der Pipettiervorrichtung;
- Aufsaugen eines Volumens einer Reagenzflüssigkeit in die beheizte Pipettiernadel;
- Verfahren der Pipettiernadel zu dem gewünschten Ort der Abgabe des aufgesaugten Volumens der Reagenzflüssigkeit in ein Reaktionsgefäß; dann
- Messen der Temperatur mit dem ersten und mit dem zweiten Temperatursensor;
- Vergleichen der von dem ersten Temperatursensor gemessenen Temperatur mit einer vorgegebenen Mindesttemperatur und einer vorgegebenen Maximaltemperatur; und
- Feststellen, dass die von dem ersten Temperatursensor gemessene Temperatur entweder
   (i) die vorgegebene Maximaltemperatur überschreitet, oder
   (ii) die vorgegebene Maximaltemperatur nicht überschreitet und die vorgegebene Mindesttemperatur nicht unterschreitet, oder
   (iii) die vorgegebene Mindesttemperatur unterschreitet,
wobei
- wenn festgestellt wird, dass die von dem ersten Temperatursensor gemessene Temperatur (i) die vorgegebene Maximaltemperatur überschreitet oder (iii) die vorgegebene Mindesttemperatur unterschreitet - das aufgesaugte Volumen der Reagenzflüssigkeit von der Pipettiernadel abgegeben und dann entsorgt wird.

Das automatische Analysegerät umfasst ferner eine Steuerung, die ferner so konfiguriert ist, dass - wenn festgestellt wird, dass die von dem ersten Temperatursensor gemessene Temperatur (ii) die vorgegebene Maximaltemperatur nicht überschreitet und die vorgegebene Mindesttemperatur nicht unterschreitet - zusätzlich die folgenden Verfahrensschritte ausgeführt werden:
- Ermitteln der absoluten Temperaturdifferenz zwischen der von dem ersten Temperatursensor gemessenen Temperatur und der von dem zweiten Temperatursensor gemessenen Temperatur;
- Vergleichen der ermittelten Temperaturdifferenz mit einem vorgegebenen Maximaltemperaturdifferenzwert; und
- Feststellen, dass die ermittelte Temperaturdifferenz entweder
   (a) größer ist als der vorgegebene Maximaltemperaturdifferenzwert oder
   (b) kleiner oder gleich dem vorgegebenen Maximaltemperaturdifferenzwert ist,
wobei
- wenn festgestellt wird, dass (a) die ermittelte Temperaturdifferenz größer ist als der vorgegebene Maximaltemperaturdifferenzwert - das aufgesaugte Volumen der Reagenzflüssigkeit von der Pipettiernadel abgegeben und dann entsorgt wird.

Ein bevorzugtes automatisches Analysegerät kann eine Aufnahmeposition für ein Abfallgefäß und/oder eine Waschstationen für Pipettiernadeln aufweisen. Die Entsorgung eines aufgesaugten Volumens von Reagenzflüssigkeit kann dann dadurch erfolgen, dass die Pipettiernadel in eine Position verfahren wird, in der die Abgabe des aufgesaugten Volumens der Reagenzflüssigkeit in das Abfallgefäß oder in die Waschstation erfolgt.

In einer bevorzugten Ausführungsform umfasst das automatische Analysegerät eine Steuerung, die ferner so konfiguriert ist, dass - wenn festgestellt wird, dass in mindestens drei aufeinander folgenden Pipettiervorgängen mit dem erfindungsgemäßen Verfahren jeweils eine Entsorgung von aufgesaugter Reagenzflüssigkeit vorgenommen wurde - zusätzlich die folgenden Verfahrensschritte ausgeführt werden:
- Generieren einer Fehlermeldung, und/oder
- Außerbetriebsetzen der Pipettiervorrichtung.

Vorzugsweise ist die Steuerung so konfiguriert, dass die Fehlermeldung in Form einer Textnachricht oder in Form eines Piktogramms auf einem Bildschirm des automatischen Analysegeräts angezeigt wird oder in Form eines akustischen Signals von einem Lautsprecher des automatischen Analysegeräts abgegeben wird oder in Form eines visuellen Signals von einer Warnlampe des automatischen Analysegeräts abgegeben wird. Dies ermöglicht einem Benutzer den schnellstmöglichen Eingriff zur Behebung des Fehlers, beispielsweise durch einen Austausch der defekten Pipettiervorrichtung.

Das Außerbetriebsetzen der Pipettiervorrichtung stellt sicher, dass keine weiteren Reagenz- oder Probenflüssigkeiten verschwendet werden.

In einer weiteren Ausführungsform umfasst das automatische Analysegerät eine Steuerung, die ferner so konfiguriert ist, dass - wenn festgestellt wird, dass (b) die ermittelte Temperaturdifferenz kleiner oder gleich dem vorgegebenen Maximaltemperaturdifferenzwert ist - die folgenden Verfahrensschritte ausgeführt werden:
- Abgabe des aufgesaugten Volumen der Reagenzflüssigkeit von der Pipettiernadel in das Reaktionsgefäß,
- Zuführen des Reaktionsgefäß mit dem Reaktionsansatz zu einer Messeinheit, und
- Messen einer physikalischen Eigenschaft des Reaktionsansatzes in der Messeinheit.

Bei der Messeinheit des automatischen Analysegeräts kann es sich beispielsweise um ein Photometer für die Extinktionsmessung, ein Nephelometer für die Messung von Streulicht, ein Luminometer für die Messung von Lichtemission (z.B. Fluoreszenz, Phosphoreszenz etc.) oder ein Radiometer handeln.

Unter einer "zu analysierenden Flüssigkeit" sind im Sinne der vorliegenden Erfindung in erster Linie menschliche oder tierische Körperflüssigkeiten, wie beispielsweise Blut, Plasma, Serum, Urin, Liquor, Fruchtwasser etc. zu verstehen, aber auch z.B. Zellkulturproben, pflanzliche Flüssigkeiten, Wasser- und Abwasserproben, Nahrungsmittel oder Arzneimittel.

Unter einer "Reagenzflüssigkeit" ist eine Flüssigkeit zu verstehen, die mindestens eine Substanz enthält, die für den qualitativen oder quantitativen Nachweis eines Analyten notwendig ist. Je nach Art des Analyten und der Nachweisreaktion kommen beispielsweise immunreaktive Substanzen, wie Antikörper oder Antigene, oder Komponenten einer Enzymreaktion, wie beispielsweise chromogene Substrate, als Nachweissubstanzen in Frage.

Die Erfindung wird im Folgenden anhand einer Zeichnung erläutert.

Darin zeigen
- FIG. 1 eine: Pipettiernadel einer Pipettiervorrichtung;
- FIG. 2: ein erfindungsgemäßes automatisches Analysegerät;
- FIG. 3: ein Ablaufdiagramm einer ersten Variante des erfindungsgemäßen Verfahrens zur Bereitstellung eines Reaktionsansatzes; und
- FIG. 4: ein Ablaufdiagramm einer zweiten Variante des erfindungsgemäßen Verfahrens zur Bereitstellung eines Reaktionsansatzes.

Gleiche Teile sind in allen Figuren mit denselben Bezugszeichen versehen.

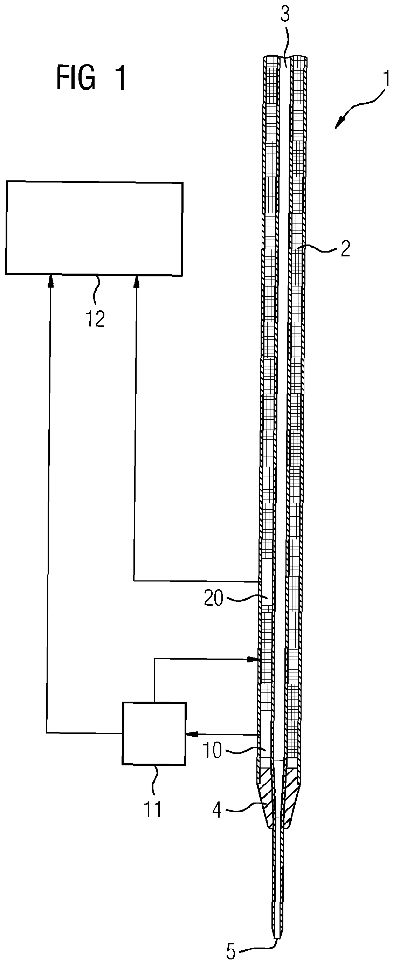

FIG. 1 ist eine schematische Darstellung einer beheizbaren Pipettiernadel 1, die Teil einer nicht näher dargestellten Pipettiervorrichtung eines automatischen Analysegeräts ist. Die Pipettiernadel 1 besteht aus einer zylindrischen Hohlnadel aus Edelstahl, die mit einem Heizdraht 2 umwickelt ist. Die Pipettiernadel 1 weist an einem Ende eine Öffnung 3 auf, die mit einem Ansaugsystem, z.B. mit einem Zylinder und einem darin beweglichen Kolben, verbindbar ist. Am anderen Ende weist die Pipettiernadel 1 eine konisch geformte Spitze 4 mit einer Öffnung 5 auf. Die Pipettiernadel 1 weist einen ersten Temperatursensor 10 und einen zweiten Temperatursensor 20 auf. Der erste Temperatursensor 10, der von der Nadelspitze 4 weniger weit entfernt ist als der zweite Temperatursensor 20, ist direkt mit einer Steuerung 11 verbunden, die direkt die Wärmeerzeugung durch den Heizdraht 2 regeln kann. Die Steuerung 11 ist ferner mit einer übergeordneten Steuereinheit 12 verbunden, an die sie die zu einem bestimmten Zeitpunkt von dem Temperatursensor 10 gemessene Temperatur übermitteln kann. Der zweite Temperatursensor 20 dient lediglich als Referenztemperatursensor und weist daher keine Verbindung zu einer Steuerung 11 auf, sondern lediglich eine Verbindung zu der übergeordneten Steuereinheit 12, an die er die zu einem bestimmten Zeitpunkt von dem Temperatursensor 20 gemessene Temperatur übermitteln kann.

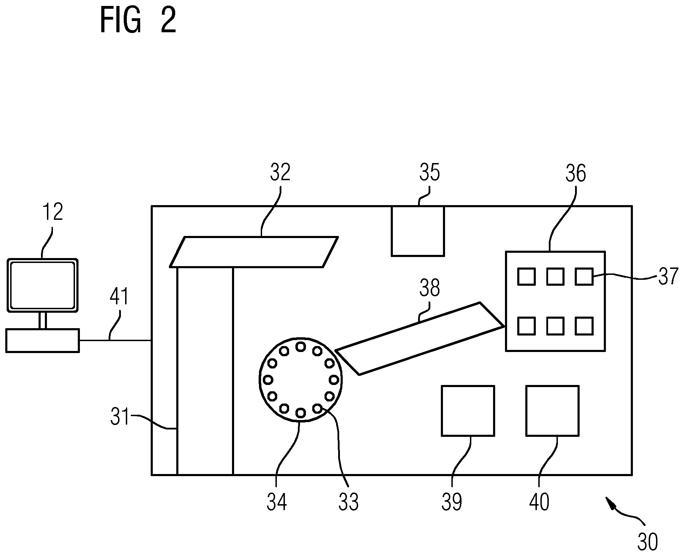

FIG. 2 ist eine schematische Darstellung eines automatischen Analysegeräts 30 mit einigen darin enthaltenen Bauteilen. Hierbei werden nur die wichtigsten Bauteile stark vereinfacht dargestellt, um die grundsätzliche Funktion des automatischen Analysegeräts 30 zu erläutern, ohne hierbei detailliert die einzelnen Teile jedes Bauteils darzustellen.

Das automatische Analysegerät 30 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Reagenzgefäße ausgetauscht werden müssen.

Die Patientenproben werden dem automatischen Analysegerät 30 auf nicht näher dargestellten Schlitten über eine Zuführungsschiene 31 zugeführt. Informationen hinsichtlich der pro Probe durchzuführenden Analysen können beispielsweise mittels auf den Probengefäßen angebrachten Strichcodes übergeben werden, die in dem automatischen Analysegerät 30 ausgelesen werden. Aus den Probengefäßen werden mit Hilfe einer ersten Pipettiervorrichtung 32 Probenaliquots mittels einer Pipettiernadel entnommen.

Die Probenaliquots werden ebenfalls nicht näher dargestellten Küvetten zugeführt, die in Aufnahmepositionen 33 einer drehbaren, auf 37 °C temperierten Inkubationseinrichtung 34 angeordnet sind. Die Küvetten werden aus einem Küvettenvorratsbehälter 35 entnommen. In dem auf ca. 8-10 °C gekühlten Reagenzgefäßvorratsbehälter 36 werden Reagenzgefäße 37 mit verschiedenen Reagenzflüssigkeiten aufbewahrt. Reagenzflüssigkeit wird mittels einer wie in FIG. 1 dargestellten beheizbaren Pipettiernadel 1 einer zweiten, erfindungsgemäßen Pipettiervorrichtung 38 aus einem Reagenzgefäß 37 entnommen und zur Bereitstellung eines Reaktionsansatzes in eine Küvette, die bereits ein Probenaliquot enthält, abgegeben. Wird bei der Prüfung der Pipettiernadeltemperatur vor Abgabe der Reagenzflüssigkeit festgestellt, dass die Temperatur im vorgegebenen Toleranzbereich liegt, wird die Küvette mit dem Reaktionsansatz von einem nicht dargestellten Transferarm mit einem Greifer von der Inkubationseinrichtung 34 in eine photometrische Messeinheit 39 transportiert, wo die Extinktion des Reaktionsansatzes gemessen wird. Nach Abschluss der Messung wird die Küvette in einen Abfallbehälter 40 für gebrauchte Küvetten entsorgt. Wird bei der Prüfung der Pipettiernadeltemperatur vor Abgabe der Reagenzflüssigkeit jedoch festgestellt, dass die Temperatur außerhalb des vorgegebenen Toleranzbereichs liegt, wird die Küvette mit dem Reaktionsansatz von dem Transferarm von der Inkubationseinrichtung 34 direkt in den Abfallbehälter 40 transportiert.

Der gesamte Prozess wird von einer Steuereinheit 12, wie z.B. von einem über eine Datenleitung 41 angeschlossenen Rechner gesteuert, unterstützt durch eine Vielzahl weiterer, nicht näher dargestellter elektronischer Schaltungen und Mikroprozessoren innerhalb des automatischen Analysegeräts 30 und seiner Bauteile.

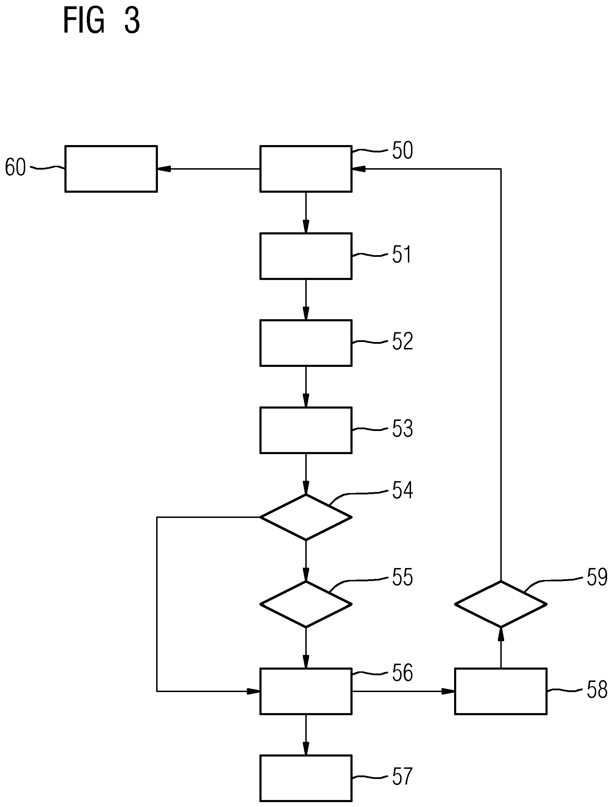

FIG. 3 stellt ein Ablaufdiagramm eines Verfahrens zur Bereitstellung eines Reaktionsansatzes in dem in FIG. 2 gezeigten automatischen Analysegerät 30 dar, das u.a. eine Pipettiervorrichtung 38 mit einer wie in FIG. 1 gezeigten Pipettiernadel 1 umfasst.

In Schritt 50 wird von der zentralen Steuereinheit 12 ein Auftrag für die Durchführung eines Analysevorgangs erteilt, der mehrere Schritte umfasst. Die Pipettiervorrichtung 38 enthält spezifische Anweisungen, die für diesen Analysevorgang notwendigen Schritte für die Zuführung der Reagenzflüssigkeit in eine bestimmte Küvette durchzuführen. In einem ersten Schritt 51 des Pipettiervorgangs wird die Pipettiervorrichtung 38 horizontal zu dem Reagenzgefäß 37 verfahren, welches die benötigte Reagenzflüssigkeit enthält, die beheizte Pipettiernadel 1 wird in die gekühlte Reagenzflüssigkeit (ca. 8-10 °C) eingetaucht, das angeforderte Volumen wird angesaugt, und die Pipettiernadel 1 wird aus der Reagenzflüssigkeit ausgetaucht. In einem zweiten Schritt 52 des Pipettiervorgangs wird die Pipettiervorrichtung 38 horizontal zu der Inkubationseinrichtung 34 verfahren, die in einer der Aufnahmepositionen 33 die für die Aufnahme der Reagenzflüssigkeit vorgesehene und bereits mit Probenflüssigkeit befüllte Küvette enthält. Während des Verfahrens der Pipettiervorrichtung 38 vom Entnahme- zum Abgabeort wird die Reagenzflüssigkeit in der beheizten Pipettiernadel 1 erwärmt. In Schritt 53 des Pipettiervorgangs werden am Abgabeort, vor Abgabe der Reagenzflüssigkeit die Temperaturmesswerte der Temperatursensoren 10, 20 der Pipettiernadel 1 erfasst und an die übergeordnete Steuereinheit 12 übermittelt. In der Steuereinheit 12 wird in Schritt 54 zunächst die von dem Nadelspitzen-nahen ersten Temperatursensor 10 gemessene Temperatur mit einer vorgegebenen Mindesttemperatur und einer vorgegebenen Maximaltemperatur verglichen. Wird in Schritt 54 festgestellt, dass die vom Temperatursensor 10 gemessene Temperatur im vorgegebenen Toleranzbereich liegt, wird dann in Schritt 55 in der Steuereinheit 12 die absolute Temperaturdifferenz zwischen der von dem ersten Temperatursensor 10 gemessenen Temperatur und der von dem zweiten Temperatursensor 20 gemessenen Temperatur ermittelt und mit einem vorgegebenen Maximaltemperaturdifferenzwert verglichen. Wird in Schritt 55 festgestellt, dass die absolute Temperaturdifferenz kleiner oder gleich dem vorgegebenen Maximaltemperaturdifferenzwert ist, wird dann in Schritt 56 die Reagenzflüssigkeit in die Küvette abgegeben. In Schritt 57 wird die Küvette mit dem Reaktionsansatz von der Inkubationseinrichtung 34 zu der photometrischen Messeinheit 39 transportiert, wo die Extinktion des Reaktionsansatzes gemessen wird. Die Extinktionsmesswerte werden an die Steuereinheit 12 übermittelt, in der dann die Auswertung der Messergebnisse und die Ausgabe eines Analyseergebnisses erfolgt.

Wird in Schritt 54 allerdings festgestellt, dass die vom Temperatursensor 10 gemessene Temperatur außerhalb des vorgegebenen Toleranzbereichs liegt, oder wird in Schritt 55 festgestellt, dass die absolute Temperaturdifferenz der von den beiden Temperatursensoren gemessenen Temperaturen größer ist als der vorgegebene Maximaltemperaturdifferenzwert, wird nach der Abgabe der Reagenzflüssigkeit in die Küvette in Schritt 56 nicht zu Schritt 57, sondern zu Schritt 58 übergegangen, in dem der Analysevorgang abgebrochen wird, indem die Küvette mit dem Reaktionsansatz von der Inkubationseinrichtung 34 zu dem Abfallbehälter 40 transportiert und dort entsorgt wird. In Schritt 59 wird der Steuereinheit 12 die Information über den Abbruch des Analysevorgangs übermittelt, worauf hin die Steuereinheit 12 den Auftrag für die Durchführung des Analysevorgangs gemäß Schritt 50 nochmals erteilt.

Für den Fall, dass derselbe Analysevorgang dreimal hintereinander abgebrochen werden musste, weil in den Schritten 54 oder 55 die erforderlichen Kriterien nicht erfüllt wurden, wird in Schritt 60 die Pipettiervorrichtung 38 von der zentralen Steuereinheit 12 außer Betrieb gesetzt, und es wird eine Fehlermeldung für einen Benutzer generiert.

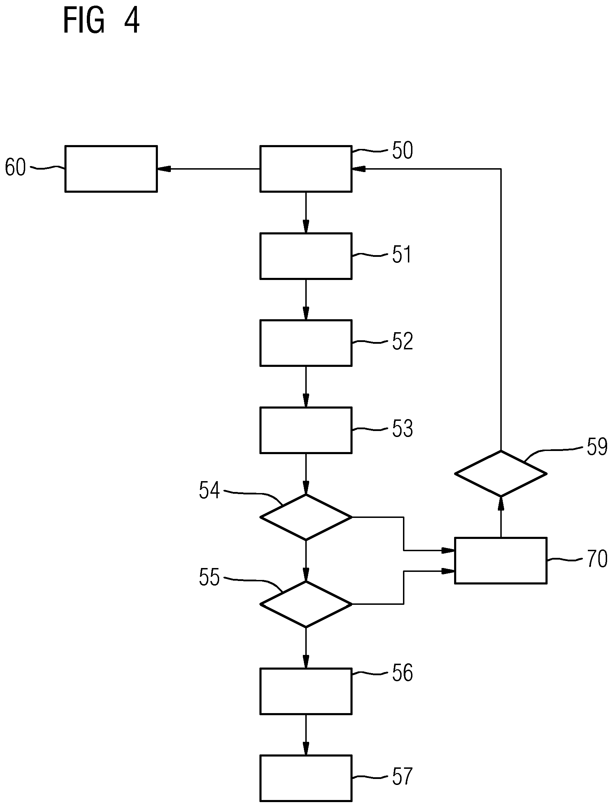

FIG. 4 stellt ein Ablaufdiagramm eines etwas modifizierten Verfahrens zur Bereitstellung eines Reaktionsansatzes in dem in FIG. 2 gezeigten automatischen Analysegerät 30 dar, das u.a. eine Pipettiervorrichtung mit einer wie in FIG. 1 gezeigten Pipettiernadel umfasst und eine Waschstation für Pipettiernadeln.

Die Schritte 50 bis 57 sind im Wesentlichen identisch zu den Schritten 50 bis 57 des in FIG. 3 gezeigten Verfahrens. Der Unterschied besteht darin, dass, wenn in Schritt 54 festgestellt wird, dass die vom Temperatursensor 10 gemessene Temperatur außerhalb des vorgegebenen Toleranzbereichs liegt, oder wenn in Schritt 55 festgestellt wird, dass die absolute Temperaturdifferenz der von den beiden Temperatursensoren gemessenen Temperaturen größer ist als der vorgegebene Maximaltemperaturdifferenzwert, keine Abgabe der Reagenzflüssigkeit in die Küvette in Schritt 56 erfolgt, sondern zu Schritt 70 übergegangen wird, in dem der Analysevorgang abgebrochen wird, indem die Pipettiervorrichtung 38 mit der noch angesaugten Reagenzflüssigkeit in der Pipettiernadel 1 zu einer (in FIG. 2 nicht dargestellten) Waschstation für Pipettiernadeln verfahren wird und die Reagenzflüssigkeit in die Waschstation abgegeben und damit entsorgt wird.

Diese Variante des Verfahrens hat den Vorteil, dass die Probenflüssigkeit in der Küvette für eine Wiederholung des Analysevorgangs weiterhin zur Verfügung steht.

Die Schritte 59 und 60 sind ebenfalls identisch zu den Schritten 59 und 60 des in FIG. 3 gezeigten Verfahrens.

### BEZUGSZEICHENLISTE

- 1: Pipettiernadel
- 2: Heizdraht
- 3: Öffnung
- 4: Spitze
- 5: Öffnung
- 10: Temperatursensor
- 11: Steuerung
- 12: Steuereinheit
- 20: Temperatursensor
- 30: Analysegerät
- 31: Zuführungsschiene
- 32: Pipettiervorrichtung
- 33: Aufnahmeposition
- 34: Inkubationseinrichtung
- 35: Küvettenvorratsbehälter
- 36: Reagenzgefäßvorratsbehälter
- 37: Reagenzgefäß
- 38: Pipettiervorrichtung
- 39: Messeinheit
- 40: Abfallbehälter
- 41: Datenleitung

- 50-70: Verfahrensschritte

## Patentansprüche

1. Verfahren zur Bereitstellung eines Reaktionsansatzes bestehend aus einem Gemisch einer zu analysierenden Flüssigkeit und mindestens einer Reagenzflüssigkeit in einem Reaktionsgefäß, bei dem eine an einem automatisch verfahrbaren oder schwenkbaren Transferarm befestigte Pipettiervorrichtung (38) umfassend eine beheizbare Pipettiernadel (1) verwendet wird und wobei die Pipettiernadel (1) einen ersten Temperatursensor (10) in geringer Entfernung zur Spitze (4) der Pipettiernadel (1) und einen zweiten Temperatursensor (20) in größerer Entfernung zur Spitze (4) der Pipettiernadel (1) aufweist, das Verfahren umfassend die folgenden Schritte:
• Aufsaugen eines Volumens einer Reagenzflüssigkeit in die beheizbare Pipettiernadel (1);
• Verfahren der Pipettiernadel (1) zu dem gewünschten Ort der Abgabe des aufgesaugten Volumens der Reagenzflüssigkeit in ein Reaktionsgefäß; dann
• Messen der Temperatur mit dem ersten und mit dem zweiten Temperatursensor (10, 20);
• Vergleichen der von dem ersten Temperatursensor (10) gemessenen Temperatur mit einer vorgegebenen Mindesttemperatur und einer vorgegebenen Maximaltemperatur; und
• Feststellen, dass die von dem ersten Temperatursensor (10) gemessene Temperatur entweder
(i) die vorgegebene Maximaltemperatur überschreitet, oder
(ii) die vorgegebene Maximaltemperatur nicht überschreitet und die vorgegebene Mindesttemperatur nicht unterschreitet, oder
(iii) die vorgegebene Mindesttemperatur unterschreitet,
wobei
- wenn festgestellt wird, dass die von dem ersten Temperatursensor (10) gemessene Temperatur (i) die vorgegebene Maximaltemperatur überschreitet oder (iii) die vorgegebene Mindesttemperatur unterschreitet - das aufgesaugte Volumen der Reagenzflüssigkeit von der Pipettiernadel (1) abgegeben und dann entsorgt wird, und
- wenn festgestellt wird, dass die von dem ersten Temperatursensor (10) gemessene Temperatur (ii) die vorgegebene Maximaltemperatur nicht überschreitet und die vorgegebene Mindesttemperatur nicht unterschreitet - die folgenden Schritte ausgeführt werden:
• Ermitteln der absoluten Temperaturdifferenz zwischen der von dem ersten Temperatursensor (10) gemessenen Temperatur und der von dem zweiten Temperatursensor (20) gemessenen Temperatur;
• Vergleichen der ermittelten Temperaturdifferenz mit einem vorgegebenen Maximaltemperaturdifferenzwert; und
• Feststellen, dass die ermittelte Temperaturdifferenz entweder
(a) größer ist als der vorgegebene Maximaltemperaturdifferenzwert oder
(b) kleiner oder gleich dem vorgegebenen Maximaltemperaturdifferenzwert ist,
wobei
- wenn festgestellt wird, dass (a) die ermittelte Temperaturdifferenz größer ist als der vorgegebene Maximaltemperaturdifferenzwert - das aufgesaugte Volumen der Reagenzflüssigkeit von der Pipettiernadel (1) abgegeben und dann entsorgt wird, und
- wenn festgestellt wird, dass (b) die ermittelte Temperaturdifferenz kleiner oder gleich dem vorgegebenen Maximaltemperaturdifferenzwert ist - das aufgesaugte Volumen der Reagenzflüssigkeit von der Pipettiernadel (1) in das Reaktionsgefäß abgegeben wird und das Reaktionsgefäß mit dem Reaktionsansatz einer Messeinheit (39) zugeführt wird, in der eine physikalische Eigenschaft des Reaktionsansatzes gemessen wird.

2. Verfahren gemäß Anspruch 1, wobei die Abgabe des aufgesaugten Volumens der Reagenzflüssigkeit und dessen Entsorgung erfolgen, indem die Pipettiernadel (1) in eine Position verfahren wird, in der die Abgabe des aufgesaugten Volumens der Reagenzflüssigkeit in ein Abfallgefäß erfolgt.

3. Verfahren gemäß Anspruch 1, wobei die Abgabe des aufgesaugten Volumens der Reagenzflüssigkeit und dessen Entsorgung erfolgen, indem die Pipettiernadel (1) in eine Position verfahren wird, in der die Abgabe des aufgesaugten Volumens der Reagenzflüssigkeit in eine Waschstation für Pipettiernadeln erfolgt.

4. Verfahren gemäß Anspruch 1, wobei die Abgabe des aufgesaugten Volumens der Reagenzflüssigkeit und dessen Entsorgung erfolgen, indem das aufgesaugte Volumen der Reagenzflüssigkeit von der Pipettiernadel (1) in das Reaktionsgefäß abgegeben wird und das Reaktionsgefäß mit dem Reaktionsansatz verworfen wird.

5. Automatisches Analysegerät (30) mit
• mindestens einer an einem automatisch verfahrbaren oder schwenkbaren Transferarm befestigten Pipettiervorrichtung (38), die Pipettiervorrichtung (38) umfassend
(a) eine Pipettiernadel (1) mit einer Spitze (4) und mit einem ersten Temperatursensor (10) in geringer Entfernung zur Spitze (4) der Pipettiernadel (1) und einem zweiten Temperatursensor (20) in größerer Entfernung zur Spitze (4) der Pipettiernadel (1),
(b) eine Heizvorrichtung (2) für die Pipettiernadel (1), und
(c) eine Steuerung (11) für die Heizvorrichtung (2),
wobei der erste Temperatursensor (10) mit der Steuerung (11) für die Heizvorrichtung (2) verbunden ist und der zweite Temperatursensor (20) keine Verbindung zu einer Steuerung (11) für eine Heizvorrichtung (2) aufweist und mit
• mehreren Aufnahmepositionen für die Aufnahme von Reagenzgefäßen (37) und mit mehreren Aufnahmepositionen (33) für die Aufnahme von Reaktionsgefäßen und mit mindestens einer Messeinheit (39) zur Messung einer physikalischen Eigenschaft eines Reaktionsansatzes,
**dadurch gekennzeichnet, dass** das Analysegerät (30) ferner eine Steuerung umfasst, die so konfiguriert ist, dass sie ein Verfahren zur Bereitstellung eines Reaktionsansatzes bestehend aus einem Gemisch einer zu analysierenden Flüssigkeit und mindestens einer Reagenzflüssigkeit in einem Reaktionsgefäß mit den folgenden Schritten steuert:
• Beheizen der Pipettiernadel (1) der Pipettiervorrichtung (38);
• Aufsaugen eines Volumens einer Reagenzflüssigkeit in die beheizte Pipettiernadel (1);
• Verfahren der Pipettiernadel (1) zu dem gewünschten Ort der Abgabe des aufgesaugten Volumens der Reagenzflüssigkeit in ein Reaktionsgefäß; dann
• Messen der Temperatur mit dem ersten und mit dem zweiten Temperatursensor (10, 20);
• Vergleichen der von dem ersten Temperatursensor (10) gemessenen Temperatur mit einer vorgegebenen Mindesttemperatur und einer vorgegebenen Maximaltemperatur; und
• Feststellen, dass die von dem ersten Temperatursensor (10) gemessene Temperatur entweder
(i) die vorgegebene Maximaltemperatur überschreitet, oder
(ii) die vorgegebene Maximaltemperatur nicht überschreitet und die vorgegebene Mindesttemperatur nicht unterschreitet, oder
(iii) die vorgegebene Mindesttemperatur unterschreitet,
wobei
- wenn festgestellt wird, dass die von dem ersten Temperatursensor (10) gemessene Temperatur (i) die vorgegebene Maximaltemperatur überschreitet oder (iii) die vorgegebene Mindesttemperatur unterschreitet - das aufgesaugte Volumen der Reagenzflüssigkeit von der Pipettiernadel (1) abgegeben und dann entsorgt wird, und wobei die Steuerung ferner so konfiguriert ist, dass
- wenn festgestellt wird, dass die von dem ersten Temperatursensor (10) gemessene Temperatur (ii) die vorgegebene Maximaltemperatur nicht überschreitet und die vorgegebene Mindesttemperatur nicht unterschreitet - zusätzlich die folgenden Verfahrensschritte ausgeführt werden:
• Ermitteln der absoluten Temperaturdifferenz zwischen der von dem ersten Temperatursensor (10) gemessenen Temperatur und der von dem zweiten Temperatursensor (20) gemessenen Temperatur;
• Vergleichen der ermittelten Temperaturdifferenz mit einem vorgegebenen Maximaltemperaturdifferenzwert; und
• Feststellen, dass die ermittelte Temperaturdifferenz entweder
(a) größer ist als der vorgegebene Maximaltemperaturdifferenzwert oder
(b) kleiner oder gleich dem vorgegebenen Maximaltemperaturdifferenzwert ist,
wobei
- wenn festgestellt wird, dass (a) die ermittelte Temperaturdifferenz größer ist als der vorgegebene Maximaltemperaturdifferenzwert - das aufgesaugte Volumen der Reagenzflüssigkeit von der Pipettiernadel abgegeben und dann entsorgt wird.

6. Automatisches Analysegerät (30) gemäß Anspruch 5, wobei die Steuerung ferner so konfiguriert ist, dass - wenn festgestellt wird, dass (b) die ermittelte Temperaturdifferenz kleiner oder gleich dem vorgegebenen Maximaltemperaturdifferenzwert ist - die folgenden Verfahrensschritte ausgeführt werden:
• Abgabe des aufgesaugten Volumens der Reagenzflüssigkeit von der Pipettiernadel (1) in das Reaktionsgefäß,
• Zuführen des Reaktionsgefäßes mit dem Reaktionsansatz zu einer Messeinheit (39),
• Messen einer physikalischen Eigenschaft des Reaktionsansatzes in der Messeinheit (39).

## Claims

1. Method for providing a reaction mixture consisting of a mixture of a liquid to be analyzed and at least one reagent liquid in a reaction vessel, in which a pipetting device (38), which is fastened on an automatically movable or pivotable transfer arm, comprising a heatable pipetting needle (1) is used, and wherein the pipetting needle (1) has a first temperature sensor (10) at a small distance from the tip (4) of the pipetting needle (1) and a second temperature sensor (20) at a greater distance from the tip (4) of the pipetting needle (1), the method comprising the following steps:
• aspirating a volume of a reagent liquid into the heatable pipetting needle (1);
• moving the pipetting needle (1) to the desired location for dispensing the aspirated volume of the reagent liquid into a reaction vessel; then
• measuring the temperature using the first and using the second temperature sensor (10, 20);
• comparing the temperature measured by the first temperature sensor (10) to a predefined minimum temperature and a predefined maximum temperature; and
• establishing that the temperature measured by the first temperature sensor (10) either
(i) exceeds the predefined maximum temperature, or
(ii) does not exceed the predefined maximum temperature and does not fall below the predefined minimum temperature, or
(iii) falls below the predefined minimum temperature,
wherein
- if it is established that the temperature measured by the first temperature sensor (10) (i) exceeds the predefined maximum temperature or (iii) falls below the predefined minimum temperature - the aspirated volume of the reagent liquid is dispensed from the pipetting needle (1) and then disposed of, and
- if it is established that the temperature measured by the first temperature sensor (10) (ii) does not exceed the predefined maximum temperature and does not fall below the predefined minimum temperature - the following steps are executed:
• ascertaining the absolute temperature difference between the temperature measured by the first temperature sensor (10) and the temperature measured by the second temperature sensor (20) ;
• comparing the ascertained temperature difference to a predefined maximum temperature difference value; and
• establishing that the ascertained temperature difference is either
(a) greater than the predefined maximum temperature difference value or
(b) less than or equal to the predefined maximum temperature difference value,
wherein
- if it is established that (a) the ascertained temperature difference is greater than the predefined maximum temperature difference value - the aspirated volume of the reagent liquid is dispensed from the pipetting needle (1) and then disposed of, and
- if it is established that (b) the ascertained temperature difference is less than or equal to the predefined maximum temperature difference value - the aspirated volume of the reagent liquid is dispensed from the pipetting needle (1) into the reaction vessel and the reaction vessel having the reaction mixture is supplied to a measurement unit (39), in which a physical property of the reaction mixture is measured.

2. Method according to Claim 1, wherein the dispensing of the aspirated volume of the reagent liquid and the disposal thereof are performed in that the pipetting needle (1) is moved into a position in which the dispensing of the aspirated volume of the reagent liquid takes place into a waste vessel.

3. Method according to Claim 1, wherein the dispensing of the aspirated volume of the reagent liquid and the disposal thereof are performed in that the pipetting needle (1) is moved into a position in which the dispensing of the aspirated volume of the reagent liquid takes place into a washing station for pipetting needles.

4. Method according to Claim 1, wherein the dispensing of the aspirated volume of the reagent liquid and the disposal thereof are performed in that the aspirated volume of the reagent liquid is dispensed from the pipetting needle (1) into the reaction vessel and the reaction vessel having the reaction mixture is disposed of.

5. Automatic analysis device (30) having
• at least one pipetting device (38), which is fastened on an automatically movable or pivotable transfer arm, the pipetting device (38) comprising
(a) a pipetting needle (1) having a tip (4) and having a first temperature sensor (10) at a small distance from the tip (4) of the pipetting needle (1) and a second temperature sensor (20) at a greater distance from the tip (4) of the pipetting needle (1),
(b) a heating device (2) for the pipetting needle (1), and
(c) a controller (11) for the heating device (2),
wherein the first temperature sensor (10) is connected to the controller (11) for the heating device (2) and the second temperature sensor (20) has no connection to a controller (11) for a heating device (2), and having
• multiple receptacle positions for receiving reagent vessels (37) and having multiple receptacle positions (33) for receiving reaction vessels and having at least one measurement unit (39) for measuring a physical property of a reaction mixture, **characterized in that** the analysis device (30) furthermore comprises a controller, which is configured so that it controls a method for providing a reaction mixture consisting of a mixture of a liquid to be analyzed and at least one reagent liquid in a reaction vessel, having the following steps:
• heating the pipetting needle (1) of the pipetting device (38);
• aspirating a volume of a reagent liquid into the heated pipetting needle (1);
• moving the pipetting needle (1) to the desired location of the dispensing of the aspirated volume of the reagent liquid into a reaction vessel; then
• measuring the temperature using the first and using the second temperature sensor (10, 20);
• comparing the temperature measured by the first temperature sensor (10) to a predefined minimum temperature and a predefined maximum temperature; and
• establishing that the temperature measured by the first temperature sensor (10) either
(i) exceeds the predefined maximum temperature, or
(ii) does not exceed the predefined maximum temperature and does not fall below the predefined minimum temperature, or
(iii) falls below the predefined minimum temperature,
wherein
- if it is established that the temperature measured by the first temperature sensor (10) (i) exceeds the predefined maximum temperature or (iii) falls below the predefined minimum temperature - the aspirated volume of the reagent liquid is dispensed from the pipetting needle (1) and then disposed of, and
wherein the controller is furthermore configured so that - if it is established that the temperature measured by the first temperature sensor (10) (ii) does not exceed the predefined maximum temperature and does not fall below the predefined minimum temperature - the following method steps are additionally executed:
• ascertaining the absolute temperature difference between the temperature measured by the first temperature sensor (10) and the temperature measured by the second temperature sensor (20) ;
• comparing the ascertained temperature difference to a predefined maximum temperature difference value; and
• establishing that the ascertained temperature difference is either
(a) greater than the predefined maximum temperature difference value or
(b) less than or equal to the predefined maximum temperature difference value,
wherein
- if it is established that (a) the ascertained temperature difference is greater than the predefined maximum temperature difference value - the aspirated volume of the reagent liquid is dispensed from the pipetting needle and then disposed of.

6. Automatic analysis device (30) according to Claim 5, wherein the controller is furthermore configured so that - if it is established that (b) the ascertained temperature difference is less than or equal to the predefined maximum temperature difference value - the following method steps are executed:
• dispensing the aspirated volume of the reagent liquid from the pipetting needle (1) into the reaction vessel,
• supplying the reaction vessel having the reaction mixture to a measurement unit (39),
• measuring a physical property of the reaction mixture in the measurement unit (39).

## Revendications

1. Procédé de préparation d'une masse réactionnelle, constituée d'un mélange d'un liquide à analyser et d'au moins un liquide réactif dans un récipient de réaction, dans lequel on utilise un système (38) de pipetage fixé à un bras de transfert déplaçable ou pivotant automatiquement et comprenant une aiguille (1) de pipetage pouvant être chauffée et dans lequel l'aiguille (1) de pipetage a une première sonde (10) de température à une distance petite de la pointe (4) de l'aiguille (1) de pipetage et une deuxième sonde (20) de température à une distance plus grande de la pointe de l'aiguille (1) de pipetage, le procédé comprenant les stades suivants :
• aspiration d'un volume d'un liquide réactif dans l'aiguille (1) de pipetage pouvant être chauffée ;
• déplacement de l'aiguille (1) de pipetage à l'emplacement souhaité de la cession du volume aspiré du fluide réactif à un récipient de réaction ; puis
• mesure de la température par la première et par la deuxième sondes (10, 20) de température ;
• comparaison de la température mesurée par la première sonde (10) de température à une température minimum donnée à l'avance et à une température maximum donnée à l'avance ; et
• constatation que la température mesurée par la première sonde (10) de température ou bien
(i) dépasse la température maximum donnée à l'avance, ou bien
(ii) ne dépasse pas la température maximum donnée à l'avance et n'est pas inférieure à la température minimum donnée à l'avance, ou bien
(iii) est inférieure à la température minimum donnée à l'avance,
dans lequel
- s'il est constaté que la température mesurée par la première sonde (10) de température (i) dépasse la température maximum donnée à l'avance ou (iii) est inférieure à la température minimum donnée à l'avance - le volume aspiré du liquide réactif est cédé par l'aiguille (1) de pipetage, puis évacué, et
- s'il est constaté que la température mesurée par la première sonde (10) de température (ii) ne dépasse pas la température maximum donnée à l'avance et n'est pas inférieure à la température minimum donnée à l'avance - on effectue les stades suivants :
• détermination de la différence de température absolue entre la température mesurée par la première sonde (10) de température et la température mesurée par la deuxième sonde (20) de température ;
• comparaison de la différence de température, qui a été déterminée, à une valeur de différence de température maximum donnée à l'avance ; et
• constatation que la différence de température, qui a été déterminée, soit
(a) est plus grande que la valeur de différence de température maximum donnée à l'avance, soit
(b) est inférieure ou égale à la valeur de différence de température maximum donnée à l'avance,
dans lequel
- s'il est constaté que (a) la différence de température, qui a été déterminée, est plus grande que la valeur de différence de température maximum donnée à l'avance - le volume aspiré du liquide réactif est cédé par l'aiguille (1) de pipetage, puis évacué, et
- s'il est constaté que (b) la différence de température, qui a été déterminée, est inférieure ou égale à la valeur de différence de température maximum donnée à l'avance - le volume aspiré du fluide réactif est cédé par l'aiguille (1) de pipetage au récipient de réaction et le récipient de réaction est envoyé, avec la masse réactionnelle, à une unité (39) de mesure, dans laquelle on mesure une propriété physique de la masse réactionnelle.

2. Procédé suivant la revendication 1, dans lequel la cession du volume aspiré du fluide réactif et son évacuation s'effectuent en mettant l'aiguille (1) de pipetage dans une position dans laquelle la cession du volume aspiré du fluide réactif s'effectue à un récipient de déchets.

3. Procédé suivant la revendication 1, dans lequel la cession du volume aspiré du fluide réactif et son évacuation s'effectuent en mettant l'aiguille (1) de pipetage dans une position dans laquelle la cession du volume aspiré du fluide réactif s'effectue à un poste de lavage d'aiguilles de pipetage.

4. Procédé suivant la revendication 1, dans lequel la cession du volume aspiré du fluide réactif et son évacuation s'effectuent en cédant le volume aspiré de fluide réaction de l'aiguille (1) de pipetage au récipient de réaction et en jetant le récipient de réaction avec la masse réactionnelle.

5. Appareil (30) d'analyse automatique, comprenant
• au moins un système (38) de pipetage fixé à un bras de transfert pouvant se déplacer ou pivoter automatiquement, le système (38) de pipetage comprenant
(a) une aiguille (1) de pipetage ayant une pointe (4) et une première sonde (10) de température à une distance petite de la pointe (4) de l'aiguille (1) de pipetage et une deuxième sonde (20) de température à une distance plus grande de la pointe (4) de l'aiguille (1) de pipetage,
(b) un système (2) de chauffage de l'aiguille (1) de pipetage, et
(c) une commande (11) du système (2) de chauffage,
dans lequel la premier sonde (10) de température est reliée à la commande (11) du système (2) de chauffage et la deuxième sonde (20) de température n'a pas de liaison avec une commande (11) d'un système (2) de chauffage et comprenant
• plusieurs positions de réception pour la réception de récipients (37) de réaction et comprenant plusieurs positions (33) de réception pour la réception de récipients de réaction et comprenant au moins une unité (39) de mesure pour la mesure d'une propriété physique d'une masse réactionnelle,
**caractérisé en ce que** l'appareil (30) d'analyse comprend, en outre, une commande, qui est configurée de manière à commander un procédé de préparation d'une masse réactionnelle constituée d'un mélange d'un liquide à analyser et d'au moins un liquide réactif dans un récipient de réaction par les stades suivants :
• chauffage de l'aiguille (1) de pipetage du système (38) de pipetage ;
• aspiration d'un volume d'un liquide réactif dans l'aiguille (1) de pipetage chauffée ;
• mise de l'aiguille (1) de pipetage à l'emplacement souhaité de la cession du volume aspiré du liquide réaction à un récipient de réaction ; puis
• mesure de la température par la première et par la deuxième sondes (10, 20) de température ;
• comparaison de la température mesurée par la première sonde (10) de température à une température minimum donnée à l'avance et à une température maximum donnée à l'avance ; et
• constatation que la température mesurée par la première sonde (10) de température ou bien
(i) dépasse la température maximum donnée à l'avance, ou bien
(ii) ne dépasse pas la température maximum donnée à l'avance et n'est pas inférieure à la température minimum donnée à l'avance, ou bien
(iii) est inférieure à la température minimum donnée à l'avance,
dans lequel
- s'il est constaté que la température mesurée par la première sonde (10) de température (i) dépasse la température maximum donnée à l'avance ou (iii) est inférieure à la température minimum donnée à l'avance - le volume aspiré du liquide réactif est cédé par l'aiguille (1) de pipetage, puis évacué, et
- s'il est constaté que la température mesurée par la première sonde (10) de température (ii) ne dépasse pas la température maximum donnée à l'avance et n'est pas inférieure à la température minimum donnée à l'avance - on effectue les stades suivants :
• détermination de la différence de température absolue entre la température mesurée par la première sonde (10) de température et la température mesurée par la deuxième sonde (20) de température ;
• comparaison de la différence de température, qui a été déterminée, à une valeur de différence de température maximum donnée à l'avance ; et
• constatation que la différence de température, qui a été déterminée, soit
(a) est plus grande que la valeur de différence de température maximum donnée à l'avance, soit
(b) est inférieure ou égale à la valeur de différence de température maximum donnée à l'avance,
dans lequel
- s'il est constaté que (a) la différence de température, qui a été déterminée, est plus grande que la valeur de différence de température maximum donnée à l'avance - le volume aspiré du liquide réactif est cédé par l'aiguille (1) de pipetage, puis évacué, et
- s'il est constaté que (b) la différence de température, qui a été déterminée, est inférieure ou égale à la valeur de différence de température maximum donnée à l'avance - le volume aspiré du fluide réactif est cédé par l'aiguille (1) de pipetage au récipient de réaction et le récipient de réaction est envoyé, avec la masse réactionnelle, à une unité (39) de mesure, dans laquelle on mesure une propriété physique de la masse réactionnelle.

6. Appareil (30) d'analyse automatique suivant la revendication 5, dans lequel la commande est configurée, en outre, de manière à ce que - s'il est constaté que (b) la différence de température, qui a été déterminée, est inférieure ou égale à la valeur de différence de température maximum donnée à l'avance - on effectue les stades de procédé suivants :
• cession du volume aspiré du liquide réactif par l'aiguille (1) de pipetage au récipient de réaction,
• envoie du récipient de réaction avec la masse réactionnelle à une unité (39) de mesure,
• mesure d'une propriété physique de la masse réactionnelle dans l'unité (39) de mesure.
